# EUROPEAN PATENT APPLICATION

(11) **EP 1 566 403 A2**
(43) Date of publication of application: **24.08.2005**
(21) Application number: 05001646.8
(22) Date of filing: 27.01.2005
(51) Int. Cl.: C08K 3/04, C09D 183/04

(54) **Silicone gasket compositions**

(30) Priority: 20.02.2004 US 783535; 20.05.2004 US 850049
(71) Applicant: Carl Freudenberg KG, 69469 Weinheim (DE)
(72) Inventor: Kong, Yingjie, East Lyme, CT 06333 (US); Yuan, Hui Liang, LaGrange, Georgia 30240 (US)

(57) **Abstract**

A gasket coating admixture of a silicone polymer blend of diphenyl polysiloxane silanol polymer, methylsiloxane polymer, and powdered particulate of aluminum and/or graphite is cured with zirconium acetate to provide a coating for components such as gaskets. The silicone polymer blend is optionally admixed with any of microspheres, PTFE particles, and inert particulate. The admixtures provide a basis for designed cured coatings having internally differentiated regions interbonded by cured polymer. The coating admixture has especial value in coating gasket carriers to form gasket for use in high temperature environments.

## Description

### CROSS-REFERENCE TO RELATED APPLICATION

This application is a continuation-in-part of United States Patent Application No. 10/783,535 filed on February 20, 2004. The disclosure of the above application is incorporated herein by reference.

### INTRODUCTION

This invention relates to gasket compositions. In particular, the present invention relates to compositions comprising certain silicone polymers for coating a gasket substrate.

Gaskets provide a seal between two mating components. Typically, the two components have respective (essentially coplanar or flat) mating surfaces essentially adjacently disposed except for the intervening gasket. In this regard and in the absence of the gasket, the mating surfaces frequently do not press together ideally without some voids being created between the two surfaces, and these voids can establish undesired leakage pathways between the two components. The gasket compensates for this by providing a reasonably flexible interface to fill any voids between the surfaces and also, in many cases, to provide a compressed mechanical spring between the two mating surfaces. Bolts or similar fasteners compressively connect (mate) the two components together and compress the gasket (to form a compressed spring seal) between the mating surfaces.

One common application for gaskets is to provide the interface in mating an engine block to a cylinder head of an internal combustion (IC) engine; this is considered to be one of the most difficult gasket applications because of the temperatures and pressures created on the gasket during engine operation. An exhaust manifold is another example of a component mated to an engine with a gasket. IC engine manifold gaskets are typically formed with ports for accommodating flow of fluids between the cylinder head and the exhaust manifold. In cylinder head gasket use during engine operation, combustion and exhaust gases are a source for lateral stress conditions to the gasket of greater than 1,000 lbs per square inch at a temperature of 600° Fahrenheit or greater. These high temperatures and high pressures define the performance environment for the gasket, which is compressed between the engine block and head with a force of at least 10,000 pounds per square inch to contain the hot gases.

Hot oil defines a further source of chemical solvent stress to gasket materials used in IC gaskets. When the engine ceases operating, the materials cool substantially, especially in winter environments, with attendant contractive stresses within the materials and expansive stresses from embedded frozen moisture at low temperatures. Thus, internal combustion engine gaskets are frequently exposed to a wide range of temperatures, pressures, and corrosive materials during normal use.

Cylinder head gaskets are also frequently provided with an embossed bead, for providing an essentially leak-proof seal. Another common feature of these gaskets is a stopper - a stiff metal strip providing a primary thickness offset in the gasket, which both provides a primary seal and also frequently protects softer auxiliary bead seals from over compression between the two mating surfaces.

While many gaskets are made of several different pieces stacked in a multilayer orientation, minimization of the number of parts needed for an engine is an ongoing goal. Single piece gaskets are therefore desirable. Many gaskets require seals applied as coatings rather than as separate gasket-form layers. In highly stressful operational environments, a gasket coating's ability to provide satisfactory adhesion to a (usually metal) substrate and also to persevere in robust condition during use is, therefore, most important. Conformable coatings, however, lose their adhesion over time under their operational high loading and vibration, and an improved gasket is needed to provide a long-term robust interface between the engine block and cylinder head.

### SUMMARY

The invention provides a gasket coating comprising:
(a) a silicone polymer blend of diphenyl polysiloxane silanol polymer and methylsiloxane polymer, wherein the diphyenyl polysiloxane silanol polymer is from about 45 to about 95 weight percent of the silicone polymer blend, and the methylsiloxane polymer is comparably from about 55 to about 5 weight percent of the silicone polymer blend;
(b) powdered particulate of aluminum, graphite, or a mixture thereof dispersed in the silicone polymer blend in a quantity from about 30 to about 115 parts per 100 parts by weight of the silicone polymer blend, wherein the powdered particulate has a maximum particle size of about 325 mesh; and
(c) zirconium acetate in a concentration from about 0.02 to about 1.5 parts per 100 parts by weight of the silicone polymer blend.

In further aspects of the invention, the gasket coating composition additionally comprises such materials as microspheres, soft (ground) rubber and/or PTFE particulates, fiberglass particulate, carbon fiber particulate, and inorganic fiber particulates. The present invention also provides single component gaskets comprising the compositions of this invention.

It has been found that the compositions of this invention afford advantages over gasket compositions among those known in the art, including one or more of good high temperature robustness (up to at least 900° Fahrenheit), excellent resistance to oil and moisture attack, strength with resiliency, abrasion resistance, solvent resistance, reduced cost, and adhesion to metals, graphite, composites, and other materials having a high surface tension.

Further areas of applicability will become apparent from the detailed description provided hereinafter. It should be understood that the detailed description and specific examples, while indicating embodiments of the invention, are intended for purposes of illustration only and are not intended to limit the scope of the invention.

### BRIEF DESCRIPTION OF THE DRAWINGS

The present invention will become more fully understood from the detailed description and the accompanying drawings of Figures 1 to 13.

Figure 1 depicts one laterally-extending side of one exemplary gasket, with the gasket being adapted for sealing between a cylinder head and a cylinder block.

Figure 2 is a partial cross-sectional view, taken along line 2-2 of Figure 1.

Figure 3 is a partial cross-sectional view, illustrating the exemplary gasket of Figure 1 in a partially compressed condition.

Figure 4 shows a simplified partial cross-sectional view of a gasket carrier section with a cured coating of having a microsphere enhanced region, two other regions of cured coating without microsphere enhancement, and a continuous silicone polymer phase.

Figure 5 presents a simplified partial cross-sectional view of a gasket carrier section with a flexible raised silicone polymeric bead in a cured coating reinforced by a generally concave surface portion in the gasket carrier.

Figure 6 presents a simplified partial cross-sectional view of a gasket carrier section with a raised rigid bead in a cured coating reinforced by a generally concave surface portion in the gasket carrier.

Figure 7 is a partial cross-sectional view of an alternate gasket according to the present invention, which is similar to that of Figures 1 and 2, except that the flexible stopper portion is coated but not filled with silicone polymeric material on its concave side.

Figure 8 is a partial cross-sectional view, similar to that of Figures 2 and 7, but illustrating yet another alternate embodiment of a gasket according to the present invention, wherein the flexible stopper portion has a generally serpentine, "S shaped" cross-sectional shape, essentially forming multiple flexible stoppers, with the concave portions of the flexible stopper portion alternatively being merely coated with the silicone polymeric material or at least partially filled with the silicone polymeric material.

Figure 9 is a partial cross-sectional view similar to that of Figures 2, 7, and 8, but illustrating still another alternate embodiment of a gasket according to the present invention, with the inner seal portion extending in a laterally and longitudinally inclined or angled direction, and with the flexible stopper portion being alternately merely coated with the silicone polymeric material or at least partially filled with the silicone polymeric material.

Figures 10a and 10b illustrate a partial perspective view and a partial cross-sectional view, respectively, of another alternate embodiment of the present invention, wherein the inner sealing portion of the carrier is substantially separated from the remainder of the carrier member but interconnected and held in place by two or more connecting struts.

Figures 11 a and 11 b are similar to those of Figures 10a and 10b, respectively, but illustrating yet another alternate embodiment of the present invention, wherein the inner sealing portion of the carrier member is separate from the remainder of the carrier member, but with the inner sealing portion and the intermediate carrier portion being interconnected by one or more "living hinge" sections of the silicone polymeric material.

Figure 12 is a partial schematic cross-section, conceptually illustrating other examples of other applications of the present invention.

Figure 13 shows a simplified partial cross-sectional view of a gasket carrier section with a cured polymer coating having a microsphere enhanced region and a region without microsphere enhancement, where an additional rigid region is encapsulated between the cured coating and the carrier so that the rigid region provides an polymer-covered stopper portion in the gasket.

It should be noted that the figures set forth herein are intended to exemplify the general characteristics of an apparatus, materials and methods among those of this invention, for the purpose of the description of such embodiments herein. These figures may not precisely reflect the characteristics of any given embodiment, and are not necessarily intended to define or limit specific embodiments within the scope of this invention.

### DESCRIPTION

In use, a gasket represents an intersection of considerations in both mechanical design and in materials design. In this regard, improvements in materials frequently are intertwined with improvements in mechanical design. When a component, such as a gasket, is made of a basic material coated with at least one additional material, the process of joining the materials together is also of interest. The following discussion will begin with a focus on some new silicone polymeric materials, shift in focus to a consideration of mechanical design considerations benefiting from the new silicone polymeric materials, and then focus on process considerations related to the production of the new silicone polymeric materials and their use.

The following definitions and non-limiting guidelines must be considered in reviewing the description of this invention set forth herein.

The headings (such as "Introduction" and "Summary") used herein are intended only for general organization of topics within the disclosure of the invention, and are not intended to limit the disclosure of the invention or any aspect thereof. In particular, subject matter disclosed in the "Introduction" may include aspects of technology within the scope of the invention, and may not constitute a recitation of prior art. Subject matter disclosed in the "Summary" is not an exhaustive or complete disclosure of the entire scope of the invention or any embodiments thereof.

The citation of references herein does not constitute an admission that those references are prior art or have any relevance to the patentability of the invention disclosed herein. All references cited in the Description section of this specification are hereby incorporated by reference in their entirety.

The description and specific examples, while indicating embodiments of the invention, are intended for purposes of illustration only and are not intended to limit the scope of the invention. Moreover, recitation of multiple embodiments having stated features is not intended to exclude other embodiments having additional features, or other embodiments incorporating different combinations the stated of features.

As used herein, the words "preferred" and "preferably" refer to embodiments of the invention that afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, the word "include," and its variants, is intended to be non-limiting, such that recitation of items in a list is not to the exclusion of other like items that may also be useful in the materials, compositions, devices, and methods of this invention.

The present invention provides a gasket silicone polymeric material, comprising a silicone polymer blend of diphenyl polysiloxane silanol polymer and methylsiloxane polymer, where the diphyenyl polysiloxane silanol polymer is from about 45 to about 95 weight percent of the silicone polymer blend, and the methylsiloxane polymer is comparably from about 55 to about 5 weight percent of the blend. An example of diphenyl polysiloxane silanol resin is GE-TPR178 made by General Electric Corporation. An example of methylsiloxane resin is GE-TPR179.

Powdered particulate of aluminum, graphite, or a mixture thereof is dispersed in the silicone polymer blend in a quantity from about 30 to about 115 parts per 100 parts by weight of the silicone polymer blend. The powdered particulate has a maximum particle size of about 325 mesh (that is, the particles will pass through a 325 mesh screen).

The composition also comprises a curing agent of zirconium acetate in a concentration from about 0.02 to about 1.5 parts per 100 parts by weight of the silicone polymer blend.

The new silicone polymer blend composition provides handling benefits similar to coatings based upon organic polymers. Very beneficially, however, the new composition provides properties, when cured, which are comparable to metallic coatings. In this regard, the new cured silicone polymer composition appears to be robust at 900° Fahrenheit and to survive at peaking temperatures of 1200° Fahrenheit without visual change. The new coatings have good strength and bond well to stainless steel without benefit of a primer.

In one embodiment, the composition comprises soft filler particulate of less than about 35 parts per 100 parts by weight of the silicone polymer blend. This soft filler particulate has a mean particle size from about 5 to about 50 microns. Ground rubber and polytetrafluorinated ethylene (PTFE) are two preferred soft filler particulates for the composition. The soft filler particulate is preferably dispersed within the continuous cured silicone polymer, so that at least a two phase polymeric coating is provided. The PTFE particles help to reduce wear on the gasket from engine vibration, and they also augment release of the gasket during engine disassembly.

The compositions optionally comprise microspheres preferably having a mean particle size from about 20 to about 120 microns and preferably at a concentration of from about 0.5 to about 20 parts per 100 parts by weight of the silicone polymer blend. The microspheres have shells of any of fiberglass, ceramic, glass, and combinations thereof.

The microspheres establish dispersed and sealed gaseous phases within the continuous cured silicone polymer blend, so that a foamed polymeric coating is provided. In this regard, localized regions of the coating can be engineered to have a foam attribute, and a designed coating is therefore enabled with differentiated regions interbonded with a continuous silicone polymer phase. In such embodiments, the microspheres thereby enable degrees of freedom (in concentration, size, and microsphere compositional specifics) for balancing properties related to flexibility, conformability, resiliency, and toughness in the cured coating.

The compositions of this invention optionally comprise filler particulates of fiberglass, inorganic fiber, carbon fiber, or a mixture thereof, preferably at a concentration of up to about 35 parts per 100 parts by weight of the silicone polymer blend. The filler particulates preferably have a mean particle size from about 10 to about 50 microns. In one embodiment, filler particulate is added to create a rigid region in a gasket comprising a plurality of gasket layers or regions. In one such embodiment, silicone polymer blend composition of this invention without filler particulates is first deposited on a metal substrate. Silicone polymer blend admixture with filler particulates (preferably having the same silicone polymer blend as used in the first layer) is then deposited on the first layer. Both layers are then cured. During the curing process, crosslinking occurs across the boundary between the two deposited layers so that a continuum of crosslinked silicone polymer blend is established in the cured coating. This approach enables a multi-region gasket seal having a very rigid region integrated via continuously crosslinked silicone polymer into a somewhat less rigid and metallically adhesive region. As will be further described herein, such a region enables a raised rigid bead (which, in one embodiment, provides an integrated stopper) to be provided in the derived gasket.

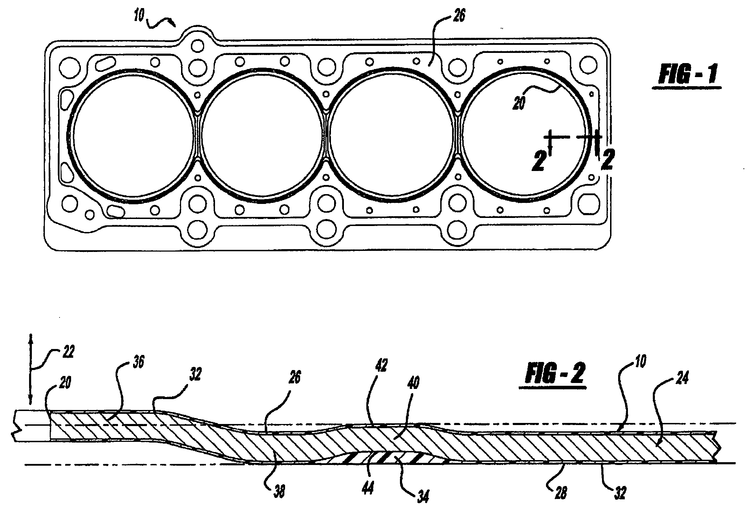

Turning now to the Figures and to mechanical design opportunities and considerations affiliated with the new silicone polymer blend coating admixtures, Figures 1 through 13 illustrate various embodiments of a gasket according to the present invention. For purposes of example, only, Figures 1 through 3 and 7 through 11 are primarily directed toward a cylinder head gasket for sealing between mating surfaces of a cylinder head and a cylinder block on an internal combustion engine, gas compressor, or other similarly configured device. It should be noted, however, as will become apparent to those skilled in the art from the following description and claims, the principles of the present invention are equally applicable to other devices used in the automotive and non-automotive industrial areas, such as exhaust manifold gaskets, flanged piping components, piping system manifold seals, or other devices where proper sealing and flexibility is desired between opposed mating surfaces of two or more members. For example the coatings described herein may also be used as coatings for the purpose of sealing leaks and cracks in items such as mufflers, exhaust pipes, and the like.

Referring initially to Figures 1 through 3, one embodiment of the invention is represented by an exemplary gasket 10 for sealing between mating member 12 and a mating member 14, which are adapted to be matingly clamped together, with gasket 10 therebetween, such as by bolts or other conventional clamping devices. Mating members 12 and 14 have respective laterally-extending mating surfaces 13 and 15 surrounding respective openings 16 and 18, which are configured for conducting fluids between members 12 and 14 generally in a longitudinal direction 22.

Gasket 10 of Figure 1 includes a substantially rigid, but still flexible, carrier 24, laterally-extending gasket sides 26 and 28, a complete coating (or at least a localized coaling) of a sealing material 32, and a gasket opening 20 adapted to be laterally aligned with openings 16 and 18 of members 12 and 14 for longitudinal communication therebetween. Gasket 10 further includes a longitudinally-offset inner sealing portion 36, an intermediate portion 38, and a longitudinally offset flexible stopper 40.

Preferably, exemplary flexible stopper 40 (which can be characterized as a "full embossment") is longitudinally offset to a lesser extent than inner sealing portion 36 (which can similarly be characterized as a "half embossment"). Flexible stopper 40 is spaced away from gasket opening 20 (as well as from mating member openings 16 and 18), with the primary sealing component of the gasket (i.e., inner sealing portion 36) and intermediate portion 38 being between flexible stopper 40 and gasket opening 20. Flexible stopper 40 has a convex side 42 and a concave side 44, either of which can be oriented toward either of members 12 or 14.

Concave side 44 can optionally be coated with a sealing material 32 such as a cured silicone polymer blend having microspheres as previously discussed, or concave side 44 is partially or completely filled with sealing material 32 such as a cured silicone polymer blend having microspheres as previously discussed. Typically, although not necessarily in a given application, inner sealing portion 36 is more flexible than flexible stopper 40.

Examples of materials for carrier 40 can include semi-rigid synthetic or natural materials, metals or non-metals, with one example being composed of 301 stainless spring steel, full-hard, from about 0.15 mm to about 0.35 mm thick. Lower hardnesses of steel or other metals can of course also be used if a reduction in spring force is desired in a particular application. However, such softer materials may, over time, exhibit a decrease in recovery performance during unloading conditions, such as those resulting from relative movement between the mating members. Other metals or metal alloys may also have application in the present invention, such as hardened carbon steel, inconel, titanium, or still others known to those skilled in the art.

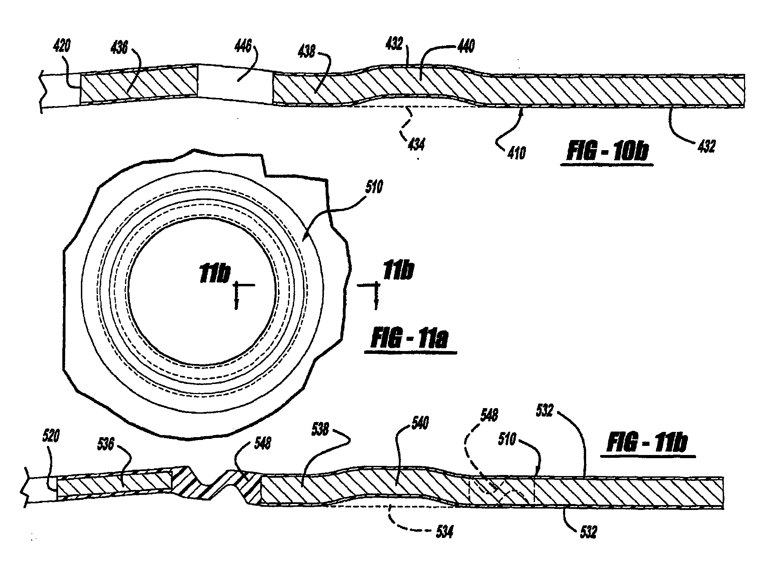

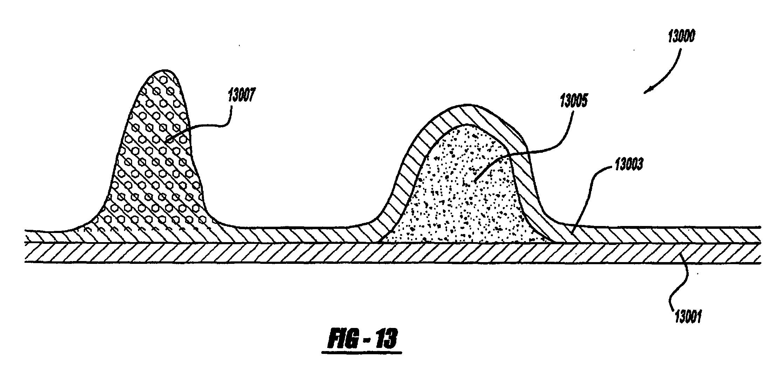

Examples of materials for sealing material 32 in the illustrated example include cured silicone polymer blends having optional microspheres as previously discussed. The silicone polymer blend coating (ultimately cured to provide sealing material 32) is, in one embodiment of an application process, applied to the carrier material and cured prior to forming the carrier itself. In an alternative application process, the silicone polymer blend coating is coated onto the carrier after it is formed; or it is coated onto localized areas as appropriate, such as those adjacent gasket opening 20 or other areas adjacent fluid openings (e.g., for lubricant, for cooling, etc.), bolt holes, or the like. Such sealing material 32 is preferably on at least both sides of any or all of inner sealing portion 36, intermediate portion 24, or flexible stopper 40. If desired to be applied only in localized areas of gasket 20, sealing material 32 is applied in a variety of different ways, such as by (in example) screen printing, direct coating, or even decal transfer. In this regard, it should also be noted that concave side 44 of flexible stopper 40 can be merely coated (as in concave side 44 on stopper 40 shown in Figure 9) or partially or completely filled with sealing material 32, either locally or as part of a larger or even an overall coating of carrier 24. In one form of the invention, the silicone polymer blend coating has a thickness of approximately 0.0002 inch to approximately 0.002 inch, as required or desirable in a particular application.

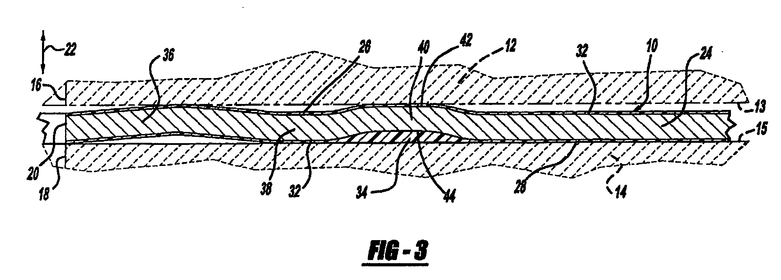

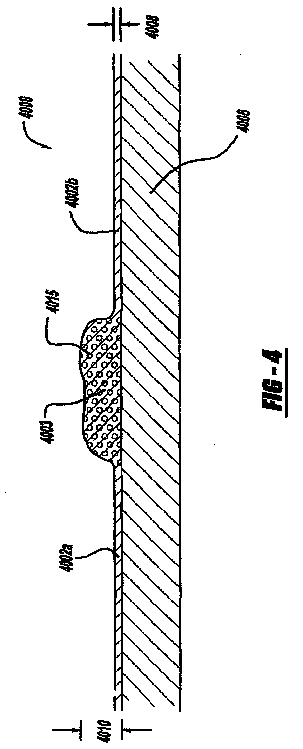

In Figure 3, gasket 10 is shown partially compressed between members 12 and 14. In this condition, as well as in other more fully compressed conditions, inner sealing portion 36 typically deflects first and provides the primary sealing about openings 16, 18 and 20. Flexible stopper 40, being typically less flexible than inner sealing portion 36, flexes to limit the amount of compression or deflection of inner sealing portion 36. This flexing preferably allows the gasket to provide more effective, repeatable and reliable sealing between members 12 and 14, especially during lower load conditions, such as those resulting from relative movement between members 12 and 14 due to compression, combustion, exhaust, or other varying pressures.

In one embodiment, the present invention provides machine components covered with a composition of this invention having differentiated regions. In this regard, in one embodiment, a first coating region without admixed microspheres is derived from a first admixture of the crosslinkable silicone polymer and a second coating region has dispersed microspheres derived from a second admixture of the crosslinkable silicone polymer. In one such embodiment, the amount of microspheres (for instance, at least 5 parts per hundred parts of crosslinkable silicone polymer) in the second region enable the second region to be "foamed" and yet smoothly interbonded with the first coating region with the cured continuous silicone polymer phase. The cured continuous silicone polymer phase (interbonding the first region and the second region) is derived from simultaneous curing of the crosslinkable silicone polymer in both regions. In this way, microspheres enable ''foam in place" regions within an otherwise non-foamed coating, so that a designed coating is enabled for a component such as a gasket. When positioned at low loading points of the gasket, the somewhat conformable foamed region facilitates an excellent seal; and, when comparably positioned at high load points of the gasket, the non-foamed regions of the coating minimize load loss derived from creep and relaxation in the compressed gasket. In another beneficial aspect, the foam region can be positioned to level and distribute the load on the gasket and thereby minimize undesirable crushing of other regions of the gasket (such as, for example, beaded portions).

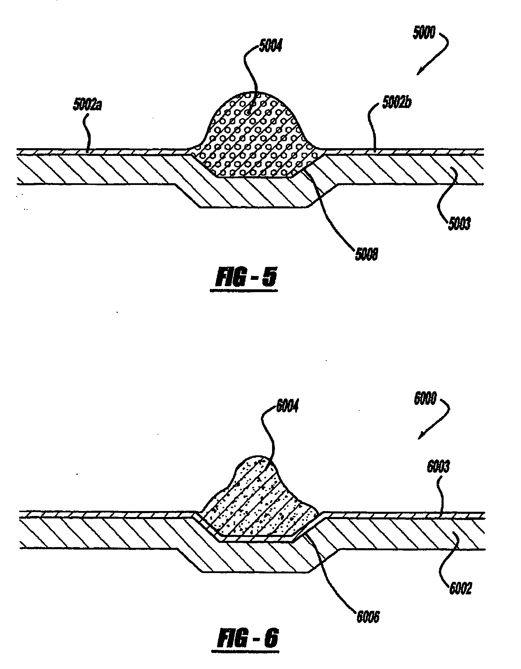

In further example of this, Figure 4 shows a simplified partial cross-sectional view of gasket embodiment 4000, taken along a position such as line 2-2 of Figure 1, but (to enable convenient focus on a particular gasket design feature used in conjunction with the silicone polymer blend coatings described herein) with a carrier 4006 that is generally flat and non-contoured. A first silicone polymer blend coating with few microspheres is disposed onto carrier 4006 at regions 4002a and 4002b. One respective benefit of few microspheres in regions 4002a and 4002b is that the adhesion of regions 4002a and 4002b to a metal substrate will be superior to the adhesion of region 4003, especially for a metal having a high surface tension. However, region 4003, as interbonded with regions 4002a and 4002b, will be still be held in secure position from the adhesion of regions 4002a and 4002b.

A second silicone polymer blend admixture having essentially the same silicone polymer blend base as the first coating, but with a large number of microspheres (see microsphere 4015), is disposed onto carrier 4006 at region 4003. After curing, region 4003 provides a "stopper" (reference stopper 40) portion in the gasket which is of raised thickness 4010 as compared to thickness 4008 of cured coating at regions 4002a and 4002b.

In one embodiment, the concentration of microspheres in the composition of gasket region 4003 is dependent upon the particular spring force desired when gasket 4000 is used. In this regard, when compressively interfaced to a second surface (as in Figure 3 where gasket 10 is shown partially compressed against surfaces of either of members 12 and 14 and flexible stopper 40 flexes to limit the amount of compression or deflection of inner sealing portion 36 due to compression), interface regions 4002a and 4002b are, in one embodiment, positioned at a location for compressively interfacing the sealing surface of gasket embodiment 4000 to a second surface (pressing against the upper surface of gasket 4000 from above gasket 4000) through, for example, use of mechanical fasteners (not shown, but which should be apparent). In such a compressive situation, the interfacing surface of region 4003 compressively interfaces to the second surface via coplanar mechanical compression derived from the compressive force exerted by the fasteners and also from inherent rigidity in the two mating components. As gasket 4000 is compressed, an internal resistive force equivalent to the compressive force will exist in compressed gasket 4000 (the opposing force exerted by a classic spring to a compressing force) at each point on gasket 4000. Under the presumption that the localized internal resistive (spring) force within gasket 4000 needs to be greatest at region 4003, the relative quantity of dispersed microspheres in region 4003 is that which provides, upon curing of the coating, a thickness 4010 which will be sufficiently greater than thickness 4008 to provide the desired localized internal resistive force maximum at region 4003.

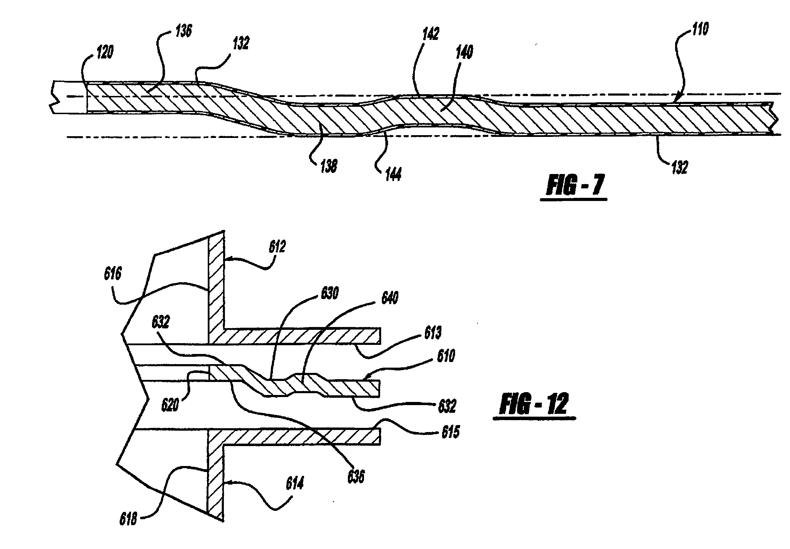

In a similar showing of an alternative feature in gasket embodiment 5000 in Figure 5, a "stopper" is provided in region 5004 which is laterally reinforced by generally concave surface portion 5008 of carrier 5003. In this regard, concave surface portion 5008 in (for example) a flexible metallic carrier 5003 provides an effective spring reinforcement of region 5004. As in Figure 4, a first silicone polymer blend coating with few microspheres is disposed onto carrier 5003 at regions 5002a and 5002b. A second silicone polymer blend having essentially the same silicone polymer blend base as the first coating but with a large number of microspheres is disposed onto carrier 5003 to ultimately, after curing, provide region 5004. As should be appreciated, a gasket having a first surface for compressively interfacing to a second surface is therefore provided with elevated compressible foam above a recessed "spring" support region 5008, with elevated foam having an upper surface concave to the attachment surface of carrier 5003 and generally convex to the second surface.

It is to be noted that the first and second silicone polymer blend coatings of both embodiments 4000 and 5000 form, during curing, a crosslinked silicone polymer continuum among and throughout, respectively, regions 4002a, 4003, and 4002b and regions 5002a, 5004, and 5002b. This enhances strength and degrees of freedom of the overall conjoined coatings insofar as macroproperties are provided in the gasket seal from the regionally differentiated properties respective to the compositionally differentiated regions.

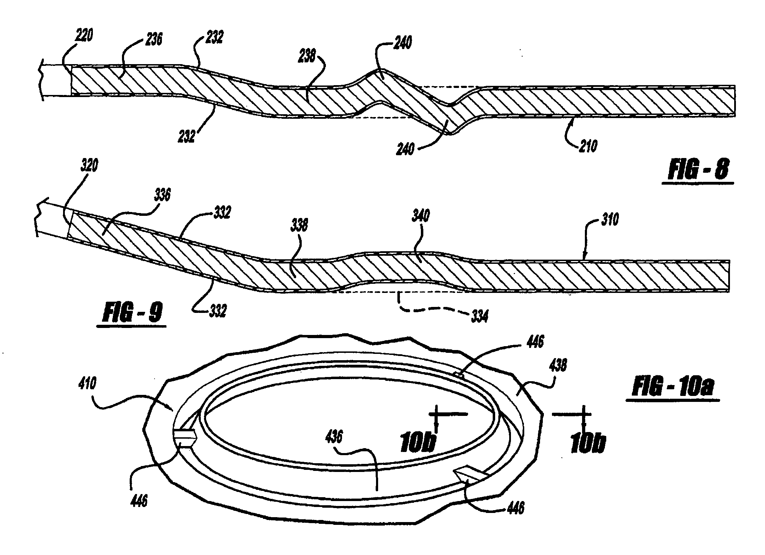

Yet another feature in gasket construction is shown in gasket embodiment 6000 of Figure 6, where a rigid "stopper" is provided in region 6004 which is laterally reinforced by generally concave surface portion 6006 of carrier 6002. A first silicone polymer blend coating is disposed onto carrier 6002 as coating region 6003. A second silicone polymer blend having essentially the same silicone polymer blend base as the first coating but with filler particulate of fiberglass, inorganic fiber, carbon fiber, or a mixture thereof is disposed onto coating region 6003 to ultimately, after curing, provide coating region 6004. The first and second silicone polymer blend coatings of regions 6004 and 6003 form, during curing, a crosslinked silicone continuum (interbonding regions 6003 and 6004) with benefits as previously outlined. The particulate filler buttresses the silicone polymer blend coating to provide the rigid region 6004 in the cured gasket seal. In the finished gasket, this region of the cured coating mechanically provides a stopper which is integral within the coating.

In an alternative embodiment of gasket embodiment 6000 of Figure 6, the material of region 6004 has a chemical base which is different from a silicone polymer blend but which will crosslink with silicone polymer blend coating 6003. In this regard, for example, region 6004 is, in one embodiment, fluoroelastomer particulate derived from vinylidene-fluoride, hexafluoropropene, and tetrafluoroethylene, where the fluoroelastomer has a Mooney viscosity from about 25 to about 75, fluorine from about 65 to about 69 atomic weight percent, at least 90 weight percent fluoroterpolymer, and halogenated crosslink sites; inert particulate from about 10 to about 50 parts per 100 parts by weight of the fluoroelastomer particulate, where the inert particulate has a particle size less than about 250 mesh; curing agent from about 0.5 to about 20 parts per 100 parts by weight of the fluoroelastomer particulate, where the curing agent crosslinks the fluoroelastomer particulate to generate cured fluoroelastomer and hydrogen ions; and metallic oxide reduction-agent particulate from about 5 to about 50 parts per 100 parts by weight of the fluoroelastomer particulate, where the metallic oxide reduction-agent particulate has a particle size less than about 250 mesh. In some embodiments, materials such as microspheres, PTFE particulates, titanium dioxide, and ferric oxide are mixed into the fluoroelastomer to provide desired performance properties in the gasket..

Figures 7 through 13 illustrate further alternate constructions or embodiments, with the reference numerals in Figures 7 through 12 indicating similar or corresponding elements to those of Figures 1 through 3, but with one-hundred through six-hundred prefixes, respectively.

Figure 7 shows a partial cross-sectional view of an alternate gasket according to the present invention, which is similar to the gasket of Figures 1 and 2, except that flexible stopper portion 140 is coated but not filled with silicone polymeric material on its concave side.

Figure 8 illustrates a gasket 210 and a generally serpentine flexible stopper 240, effectively forming a number of flexible stopper portions 240. In Figure 9, the inner sealing portion 336 is longitudinally offset in an inclined or angled direction. Figures 10a and 10b illustrate a separated inner sealing portion 436 interconnected with the remainder of gasket 410 and held in its proper position by one or more struts 446 of silicone polymer blend having microspheres. Similarly, in Figures 11a and 11b, a separated inner sealing portion 536 is interconnected with the remainder of gasket 510 and held in its proper position by one or more "living hinge" portions 536 of sealing material 532 of silicone polymer blend having microspheres. It should be noted that this construction also allows for different thicknesses of inner sealing portion 536 and the remainder of gasket 510 (with either of them being thicker or thinner than the other) in order to obtain particular deformation of silicone polymer blend having microspheres and load retention characteristics in a given application.

Figure 12 schematically illustrates, in conceptual form, the use of a gasket 610 according to the present invention in a wide variety of applications, with gasket 610 having any or any combination of the features, shapes or characteristics discussed above in connection with Figures 1 through 11. Members 612 can be flanges or other portions of any of numerous devices or structures, such as exhaust or other manifolds, piping or other fluid-conveying devices, gas compression or other high pressure constructions, sealed housings or enclosures, or other sealing applications known to those skilled in the art. As mentioned above, the invention is especially advantageous where relative movement can occur between the members being sealed, such as that caused by thermal, mechanical or fluid conditions or environments presented by a particular applications.

Figure 13 shows a simplified partial cross-sectional view 13000 of a gasket carrier section 13001 with a cured silicone polymer coating having a microsphere enhanced region 13007 and a region without microsphere enhancement 13003, where an additional rigid region 13005 is encapsulated between the cured coating and the carrier so that the rigid region provides an silicone polymer - covered stopper portion in the gasket. Region 13005 is, in one embodiment, silicone polymer enhanced with filler particulate of fiberglass, inorganic fiber, carbon fiber, or a mixture thereof as previously described; in an alternative embodiment, region 13005 is a fluoroelastomer with optionally disbursed ferric oxide or titanium dioxide as previously described.

In yet another embodiment, region 13005 is silicone polymer enhanced with filler particulate of fiberglass, inorganic fiber, carbon fiber, or a mixture thereof as previously described and regions 13007 and 13003 are resilient fluoroelastomers. In this embodiment, rigid region 13005 essentially provides a polymeric bead bonded to a portion of the surface of carrier section 13001. The remaining surface of region 13005 (free of bonding connection to the "upper" surface of carrier section 13001) rises to a maximum bead thickness - the greatest distance of the upper surface of rigid region 13005 above the upper surface of carrier 13001. Coating region 13003 has a bead enclosing portion bonded to this remaining exterior surface of polymeric bead 13005 so that polymeric bead 13005 is encapsulated within a peripheral boundary defined by the "upper" surface of carrier 13001 and the "lower surface" of the bead enclosing portion of coating region 13003. The thickness of coating region 13003 at the "crest" or highest point of region 13005 is referenced herein as the crest thickness. When rigid region 13005 and the portion of coating region 13003 covering rigid region 13005 are considered as a unified "bead" (metaphorically, a tough rigid core within a velvet coating when regions 13003 and 13007 are fluoroelastomer-based), a second maximum bead thickness for the unified bead is therefore the sum of the maximum bead thickness and the crest thickness of region 13003. In this regard, the maximum thickness of region 13007 respective to the surface of carrier 13001 is preferably greater than this second maximum bead thickness (per visual comparison of the "high points" of region 13005 as covered by region 13003 and of region 13007). This provides, for example, a gasket in use when pressed against a consistently "horizontal" upper surface (not shown but which should be apparent) where region 13007 is, (a) compressed to seal against fluid (gas or liquid) passage while still (b) precluded from inappropriate compression and distortion by the greater rigidity of region 13005. Region 13005 also provides sealing efficacy in the form of a stopper function and second seal augmented by the moderate compressibility of coating 13003 at the crest of bead 13005.

Turning now to process considerations related to the production of the new silicone polymeric materials and their use, diphenyl polysiloxane silanol polymer and methylsiloxane polymer and powdered aluminum, graphite, or a mixture thereof as previously described are admixed into a blend in a mixer to form a precursor silicone polymer blend. Curing agent of zirconium acetate as previously described herein is then admixed into the silicone polymer blend precursor shortly before use to make the coating admixture for application to a component.

The coating admixture is applied, in one embodiment of a process for using the coating admixture, to an essentially flat surface of a machine component (for example, a gasket). The component is then optionally further formed for final use. In a second embodiment, a component is first formed into a component not having a universally-flat surface of interest for coating (a component having a non-planar coating application surface); and the coating is then applied to the non-planar surface. In this regard, it has been learned that screen printing of coating admixtures onto the non-planar surface is especially facilitated by the use of a very fine screen for passing a finer granularity than at least 60 mesh, preferably about a 110 mesh printing screen, with multiple layers of the coating admixture being deposited (applied) prior to curing as needed to enable a specific coating thickness. In this regard, the thickness of each layer deposited on the non-planar surface is controlled in thickness so that surface tension of the deposited layer on either the carrier or the previously applied layer is such that that flow of the deposited layer essentially is precluded (essentially does not occur) laterally along the surface of interest and that a consistently thick coating is built thereby over the surface of interest.

After the coating admixture has been applied to the component, the component and coating are heated to from about 400° to about 450° Fahrenheit as needed to cure the coating.

The silicone polymer cured admixture is, in some embodiments, further cured and strengthened by increasing the temperature to a level of from about 1000° Fahrenheit to about 1200° Fahrenheit. In this regard, the new silicone polymer blends appear to provide opportunities in high temperature applications such as for disk brakes or for sealants for components such as mufflers, catalytic converters, and their associated piping. A further opportunity for use in surface repair is as a filler to improve surface finishes for components such as cylinder heads, engine blocks, and exhaust manifolds.

### EXAMPLE

A silicone polymeric gasket is prepared from admixing the following ingredients:

| | |
|---|---|
| TRP 179 (GE Silicone) | 20 parts |
| TRP 178 (GE Silicone) | 80 |
| Zirconium acetate | 0.02 |
| Aluminum powder | 114 |
| Graphite 4467 | 25 |
| PTFE | 5 |

The blended ingredients are coated onto a metal carrier and cured to form a tough coating which demonstrate no visible deterioration when tested in an oven capable of 1200° Fahrenheit.

The examples and other embodiments described herein are exemplary and not intended to be limiting in describing the full scope of compositions and methods of this invention. Equivalent changes, modifications and variations of specific embodiments, materials, compositions and methods may be made within the scope of the present invention, with substantially similar results.

## Claims

1. A coating admixture, comprising:
(a) a silicone polymer blend of diphenyl polysiloxane silanol polymer and methylsiloxane polymer, wherein said diphyenyl polysiloxane silanol polymer is from about 45 to about 95 weight percent of said silicone polymer blend, and said methylsiloxane polymer is comparably from about 55 to about 5 weight percent of said silicone polymer blend;
(b) powdered particulate of aluminum, graphite, or a mixture thereof dispersed in said silicone polymer blend in a quantity from about 30 to about 115 parts per 100 parts by weight of said silicone polymer blend, wherein said powdered particulate has a maximum particle size of about 325 mesh; and
(c) zirconium acetate in a concentration from about 0.02 to about 1.5 parts per 100 parts by weight of said silicone polymer blend.

2. A coating admixture according to Claim 1, further comprising soft filler particulate of less than about 35 parts per 100 parts by weight of said silicone polymer blend, said soft filler particulate having a mean particle size from about 5 to about 50 microns and selected from the group consisting of ground rubber and PTFE.

3. A coating admixture according to Claim 1, further comprising microspheres from about 0.5 to about 20 parts per 100 parts by weight of said silicone polymer blend.

4. A coating admixture according to Claim 3 wherein said microspheres are ceramic microspheres.

5. A coating admixture according to Claim 3 wherein said microspheres are glass microspheres.

6. A coating admixture according to Claim 1, further comprising fiberglass filler particulate of less than about 35 parts per 100 parts by weight of said silicone polymer blend, said fiberglass filler particulate having a mean particle size from about 10 to about 50 microns.

7. A coating admixture according to Claim 1, further comprising inorganic fiber filler particulate of less than about 35 parts per 100 parts by weight of said silicone polymer blend, said inorganic fiber filler particulate having a mean particle size from about 10 to about 50 microns.

8. A coating admixture according to Claim 1, further comprising carbon fiber filler particulate of less than about 35 parts per 100 parts by weight of said silicone polymer blend, said carbon fiber filler particulate having a mean particle size from about 10 to about 50 microns.

9. A machine component covered with a cured coating applied to a surface of said component, said cured coating having a cured continuous polymer phase derived from dispersed crosslinkable silicone polymer, said component comprising:
(a) a first coating region in said cured coating derived from a first admixture of said crosslinkable silicone polymer, said first coating region having a first coating thickness respective to said surface; and
(b) a second coating region in said cured coating derived from a second admixture of microspheres and said crosslinkable silicone polymer, said second coating region interbonded with said first coating region with said cured continuous polymer phase, said second coating region having second coating thickness respective to said surface which is greater than first coating thickness, said second coating admixture having dispersed microspheres;
wherein said cured continuous polymer phase interbonding said first region and said second region is derived from simultaneous curing of said crosslinkable silicone polymer in both said regions.

10. A machine component according to Claim 9 wherein said machine component is an exhaust gasket for an internal combustion engine.

11. A machine component according to Claim 9 wherein said cured coating is derived from a coating admixture, comprising:
(1) a silicone polymer blend of diphenyl polysiloxane silanol polymer and methylsiloxane polymer, wherein said diphyenyl polysiloxane silanol polymer is from about 45 to about 95 weight percent of said silicone polymer blend, and said methylsiloxane polymer is comparably from about 55 to about 5 weight percent of said silicone polymer blend;
(2) powdered particulate of aluminum, graphite, or a mixture thereof dispersed in said silicone polymer blend in a quantity from about 30 to about 115 parts per 100 parts by weight of said silicone polymer blend, wherein said powdered particulate has a maximum particle size of about 325 mesh; and
(3) zirconium acetate in a concentration from about 0.02 to about 1.5 parts per 100 parts by weight of said silicone polymer blend.

12. A machine component according to Claim 11 wherein said machine component is an exhaust gasket for an internal combustion engine.

13. A machine component according to Claim 9 having a recessed portion in said component surface, said recessed portion positioned at a location for compressively interfacing said component to a second component, wherein said second coating region fills said recessed portion and said second admixture has a sufficient quantity of said microspheres for providing, upon expansion of said microspheres and curing of said second region coating, an elevated compressible foam above said recessed portion, said elevated foam having an upper foam surface extending, respective to said component surface, above said first coating thickness to be generally concave to said component surface.

14. A machine component according to Claim 13 wherein said machine component is an exhaust gasket for an internal combustion engine.

15. A machine component according to Claim 9 wherein a plurality of said first coating regions are in said cured coating, said first regions positioned at a location for compressively interfacing said machine component to a second component through use of at least one mechanical fastener connected in each first coating region; and at least one said second coating region is in said coating, each second coating region positioned for compressively interfacing said machine component to said second component via coplanar mechanical compression derived from said fasteners, wherein said second admixture has a sufficient quantity of said microspheres for providing, upon expansion of said microspheres and curing of said second coating region, an elevated compressible foam with a thickness enabling a compressive seal between said second coating region and said second component.

16. A machine component according to Claim 15 wherein said machine component is an exhaust gasket for an internal combustion engine.

17. A method for making a coating admixture, comprising admixing:
(a) a silicone polymer blend of diphenyl polysiloxane silanol polymer and methylsiloxane polymer, wherein said diphyenyl polysiloxane silanol polymer is from about 45 to about 95 weight percent of said silicone polymer blend, and said methylsiloxane polymer is comparably from about 55 to about 5 weight percent of said silicone polymer blend;
(b) powdered particulate of aluminum, graphite, or a mixture thereof dispersed in said silicone polymer blend in a quantity from about 30 to about 115 parts per 100 parts by weight of said silicone polymer blend, wherein said powdered particulate has a maximum particle size of about 325 mesh; and
(c) zirconium acetate in a concentration from about 0.02 to about 1.5 parts per 100 parts by weight of said silicone polymer blend.

18. A method according to Claim 17, further comprising admixing soft filler particulate of less than about 35 parts per 100 parts by weight of said silicone polymer blend, said soft filler particulate having a mean particle size from about 5 to about 50 microns and selected from the group consisting of ground rubber and PTFE.

19. A method according to Claim 17, further comprising admixing microspheres from about 0.5 to about 20 parts per 100 parts by weight of said silicone polymer blend.

20. A method according to Claim 19 wherein said microspheres are ceramic microspheres.

21. A method according to Claim 19 wherein said microspheres are glass microspheres.

22. A method according to Claim 17, further comprising admixing fiberglass filler particulate of less than about 35 parts per 100 parts by weight of said silicone polymer blend, said fiberglass filler particulate having a mean particle size from about 10 to about 50 microns.

23. A method according to Claim 17, further comprising admixing inorganic fiber filler particulate of less than about 35 parts per 100 parts by weight of said silicone polymer blend, said inorganic fiber filler particulate having a mean particle size from about 10 to about 50 microns.

24. A method according to Claim 17, further comprising admixing carbon fiber filler particulate of less than about 35 parts per 100 parts by weight of said silicone polymer blend, said carbon fiber filler particulate having a mean particle size from about 10 to about 50 microns.

25. A gasket, comprising:
(a) an essentially rigid carrier; and
(b) a cured coating applied to at least one surface of said carrier, said coating cured from a coating admixture of:
(1) a silicone polymer blend of diphenyl polysiloxane silanol polymer and methylsiloxane polymer, wherein said diphyenyl polysiloxane silanol polymer is from about 45 to about 95 weight percent of said silicone polymer blend, and said methylsiloxane polymer is comparably from about 55 to about 5 weight percent of said silicone polymer blend;
(2) powdered particulate of aluminum, graphite, or a mixture thereof dispersed in said silicone polymer blend in a quantity from about 30 to about 115 parts per 100 parts by weight of said silicone polymer blend, wherein said powdered particulate has a maximum particle size of about 325 mesh; and
(3) zirconium acetate in a concentration from about 0.02 to about 1.5 parts per 100 parts by weight of said silicone polymer blend.

26. A gasket according to Claim 25 wherein said admixture further comprises soft filler particulate of less than about 35 parts per 100 parts by weight of said silicone polymer blend, said soft filler particulate having a mean particle size from about 5 to about 50 microns and selected from the group consisting of ground rubber and PTFE.

27. A gasket according to Claim 25 wherein said admixture further comprises microspheres from about 0.5 to about 20 parts per 100 parts by weight of said silicone polymer blend.

28. A gasket according to Claim 27 wherein said microspheres are ceramic microspheres.

29. A gasket according to Claim 27 wherein said microspheres are glass microspheres.

30. A gasket according to Claim 25 wherein said admixture further comprises fiberglass filler particulate of less than about 35 parts per 100 parts by weight of said silicone polymer blend, said fiberglass filler particulate having a mean particle size from about 10 to about 50 microns.

31. A gasket according to Claim 25 wherein said admixture further comprises inorganic fiber filler particulate of less than about 35 parts per 100 parts by weight of said silicone polymer blend, said inorganic fiber filler particulate having a mean particle size from about 10 to about 50 microns.

32. A gasket according to Claim 25 wherein said admixture further comprises carbon fiber filler particulate of less than about 35 parts per 100 parts by weight of said silicone polymer blend, said carbon fiber filler particulate having a mean particle size from about 10 to about 50 microns.

33. A gasket, comprising:
(a) an essentially rigid carrier; and
(b) a cured coating applied to at least one surface of said carrier, said coating cured having a cured continuous polymer phase derived from dispersed crosslinkable silicone polymer, said cured coating having:
(1) a first coating region in said cured coating derived from a first admixture of said crosslinkable silicone polymer, said first coating region having a first coating thickness respective to said surface; and
(2) a second coating region in said cured coating derived from a second admixture of microspheres and said crosslinkable silicone polymer, said second coating region interbonded with said first coating region with said cured continuous polymer phase, said second coating region having second coating thickness respective to said surface which is greater than first coating thickness, said second coating admixture having dispersed microspheres;
wherein said cured continuous polymer phase interbonding said first region and said second region is derived from simultaneous curing of said crosslinkable silicone polymer in both said regions.

34. A gasket according to Claim 33 wherein cured coating is derived from a coating admixture, comprising:
(1) a silicone polymer blend of diphenyl polysiloxane silanol polymer and methylsiloxane polymer, wherein said diphyenyl polysiloxane silanol polymer is from about 45 to about 95 weight percent of said silicone polymer blend, and said methylsiloxane polymer is comparably from about 55 to about 5 weight percent of said silicone polymer blend;
(2) powdered particulate of aluminum, graphite, or a mixture thereof dispersed in said silicone polymer blend in a quantity from about 30 to about 115 parts per 100 parts by weight of said silicone polymer blend, wherein said powdered particulate has a maximum particle size of about 325 mesh; and
(3) zirconium acetate in a concentration from about 0.02 to about 1.5 parts per 100 parts by weight of said silicone polymer blend.

35. A gasket according to Claim 33 wherein said gasket is an exhaust gasket for an internal combustion engine.

36. A gasket according to Claim 34 wherein said gasket is an exhaust gasket for an internal combustion engine.

37. A gasket according to Claim 33 having a recessed portion in said surface, said recessed portion positioned at a location for compressively interfacing said gasket to a component, wherein said second coating region fills said recessed portion and said second admixture has a sufficient quantity of said microspheres for providing, upon expansion of said microspheres and curing of said second region coating, an elevated compressible foam above said recessed portion, said elevated foam having an upper foam surface extending, respective to said surface, above said first coating thickness to be generally concave to said surface.

38. A gasket according to Claim 37 wherein said gasket is an exhaust gasket for an internal combustion engine.

39. A gasket according to Claim 33 wherein a plurality of said first coating regions are in said cured coating, said first regions positioned at a location for compressively interfacing said gasket between two components through use of at least one mechanical fastener connected in each first coating region; and at least one said second coating region is in said coating, each second coating region positioned for compressively interfacing said gasket to said components via coplanar mechanical compression derived from said fasteners, wherein said second admixture has a sufficient quantity of said microspheres for providing, upon expansion of said microspheres and curing of said second coating region, an elevated compressible foam with a thickness enabling a compressive seal between said second coating region and one of said components.

40. A gasket according to Claim 39 wherein said gasket is an exhaust gasket for an internal combustion engine.

41. A method for making a gasket, comprising:
(a) admixing a coating admixture;
(b) coating an essentially rigid metal carrier with said admixture; and
(c) curing said coating;
wherein said coating admixture is admixed from:
(1) a silicone polymer blend of diphenyl polysiloxane silanol polymer and methylsiloxane polymer, wherein said diphyenyl polysiloxane silanol polymer is from about 45 to about 95 weight percent of said silicone polymer blend, and said methylsiloxane polymer is comparably from about 55 to about 5 weight percent of said silicone polymer blend;
(2) powdered particulate of aluminum, graphite, or a mixture thereof dispersed in said silicone polymer blend in a quantity from about 30 to about 115 parts per 100 parts by weight of said silicone polymer blend, wherein said powdered particulate has a maximum particle size of about 325 mesh; and
(3) zirconium acetate in a concentration from about 0.02 to about 1.5 parts per 100 parts by weight of said silicone polymer blend.

42. A method according to Claim 41, further comprising admixing soft filler particulate of less than about 35 parts per 100 parts by weight of said silicone polymer blend, said soft filler particulate having a mean particle size from about 5 to about 50 microns and selected from the group consisting of ground rubber and PTFE.

43. A method according to Claim 41, further comprising admixing microspheres from about 0.5 to about 20 parts per 100 parts by weight of said silicone polymer blend.

44. A method according to Claim 41 wherein said comprises heating said coating to a temperature of 1200° Fahrenheit.
